# EUROPEAN PATENT SPECIFICATION

(11) **EP 1 541 255 B1**
(45) Date of publication and mention of the grant of the patent: **02.04.2008**
(21) Application number: 04078321.9
(22) Date of filing: 07.12.2004
(51) Int. Cl.: B21D 43/18, B65G 47/90

(54) **A means of gripping for gripping and lifting an object**
Greifmittel zum Anfassen und Aufheben eines Gegenstandes
Moyen préhenseur pour saisir et lever un objet

(30) Priority: 08.12.2003 NL 1024965
(43) Date of publication of application: 15.06.2005
(73) Proprietor: Goudsmit Magnetic Systems BV, 5582 HA Waalre (NL)
(72) Inventor: Jacobs, Adrianus Franciscus Maria, 5556 VL Valkenswaard (NL)
(74) Representative: Verhees, Godefridus Josephus Maria

(56) References cited:
- US-A- 3 159 418
- US-A- 4 121 865
- US-A- 4 504 088
- US-B1- 6 538 544

## Description

### BACKGROUND OF THE INVENTION:

### Field of the invention

The invention relates to a means of gripping in order to grip an object, for example a plate, comprising a vacuum gripper, which is provided with a vacuum chamber that is open on one side for attaching itself firmly to an object, and which is provided with a sealing edge along the perimeter of this opening that is in contact with the object when it is being gripped, and which is provided with at least one vacuum inlet on another side, which vacuum gripper comprises a means of producing a vacuum which is connected to the vacuum chamber through the vacuum inlet and which means of gripping, furthermore, comprises a gripping magnet, which along with the vacuum gripper is integrated into one unit, as well as a means of releasing the gripping magnet and the object to be lifted from each other, which means of releasing comprises a pressure chamber which is provided with an air inlet, as well as a means of blowing air that is connected to the pressure chamber through the air inlet, in order to move the gripping magnet and the open side of the vacuum chamber to and from each other.

Through the combination of a means of producing a vacuum and a gripping magnet it is possible to grip objects made of materials with magnetic properties as well as those without.

### Prior art

Such a means of gripping is known from the American patent US 4.121.865. The gripping magnet of this known means of gripping is a permanent magnet and is connected to a piston that can move in a cylinder. This piston can be moved by compressed air against the force of a spring. For this purpose, a compressed air line is connected to the cylinder. Furthermore, a vacuum line is connected to the vacuum chamber.

### Summary of the invention

An objective of the invention is to improve the means of gripping o fthe type described in the preamble. To this end, the means of gripping according to the invention is characterized in that the means of releasing comprises an inflatable bellows, the interior of which is the pressure chamber, which bellows is situated round about the gripping magnet or is connected to the gripping magnet and when it is inflated pushes the object and the gripping magnet away from each other. In this embodiment, the sealing edge is preferably situated on the bellows' underside.

The invention also relates to a lifting device for lifting an obj ect, in particular a plate, comprising a means of gripping according to the invention, as well as a means of lifting in order to raise and lower the means of gripping.

### Brief description of the drawings

The invention will be elucidated more fully below on the basis of drawings in which embodiments of the means of gripping according to the invention are shown. In these drawings:

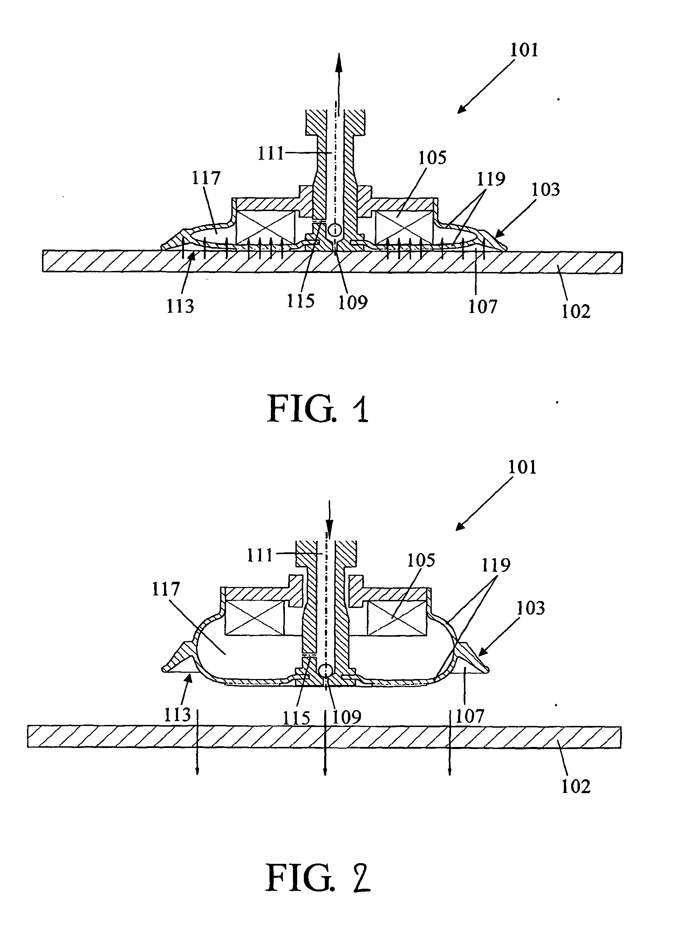

Figures 1 and 2 show a first embodiment of the means of gripping according to the invention with a bellows round about a gripping magnet which can move, while it is gripping and releasing a plate respectively; and
Figures show a second embodiment of the means of gripping according to the invention with a bellows situated round about a gripping magnet, while it is gripping and releasing a plate respectively.

### Detailed description of the drawings

In figures 1 and 2 a first embodiment of the means of gripping 101 according to the invention is shown, while it is gripping and releasing a plate 102 respectively. The means of gripping 101 is made up of a vacuum gripper 103 and a gripping magnet 105, which are integrated into one unit. The vacuum gripper 103 has a vacuum chamber 107 which is connected through a vacuum inlet 109 to a passage 111 that is connected to a pump which works in two directions.

The gripping magnet 101 can move to and from the open side 113 of the vacuum chamber by blowing air through the passage 111 and an air inlet 115 into a pressure chamber 117.

The means of releasing is made up of an inflatable bellows 119 which is situated partially round about the gripping magnet 105 and is connected to it. While air is being blown into the bellows 119, it swells as a result of which it pushes the plate 102 away from the vacuum chamber 107 and at the same time the bellows 119 pushes the gripping magnet, which is attached to the bellow's upper side, away from the plate 102, see figure 2.

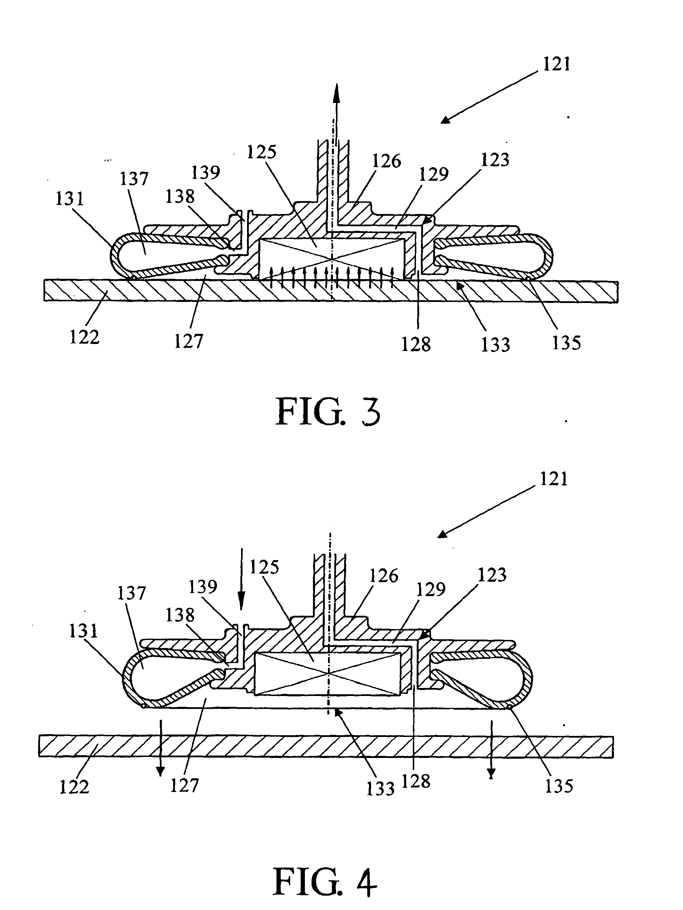

Finally, in figures 3 and 4 a second embodiment of the means of gripping 121 according to the invention is shown in a cross-section, again while it is gripping and releasing a plate 122 respectively. Here as well, a vacuum gripper 123 and a gripping magnet 125 are integrated into one unit. The unit has a casing 126 with a space in the middle in which the gripping magnet 125 is fastened. The vacuum gripper 123 has a vacuum chamber 127 which is connected through a vacuum inlet 128 to a passage 129 that is connected to a means of producing a vacuum (not shown).The vacuum chamber 127 is open on the underside and is bounded along its perimeter by an inflatable bellows 131, which also is the boundary of the open side 133 of the vacuum chamber. This bellows 131 is provided with a sealing edge 135 on its underside, which is in contact with the plate 122 while gripping the plate, see figure 4. The gripping magnet 125 is situated inside the sealing edge 135 in the vacuum chamber 127, in which the vacuum chamber, as viewed from a horizontal direction, is situated round about the gripping magnet 125.

In order to release the means of gripping 125 and the plate 122 from each other, the means of gripping 121 is provided with a means of releasing, which in this embodiment is the inflatable bellows 131. The space 137 in the bellows is connected to a means of blowing air (not shown) through an air inlet 138 and an additional passage 139 situated in the casing 126. When the bellows 131 is inflated it pushes the plate 122 away from the gripping magnet 125. The means of blowing air and the means of producing a vacuum may be executed here as separate pumps.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. Thus, the gripping magnet can also be situated concentrically about the vacuum chamber, instead of concentrically in the vacuum chamber as is shown here.

## Claims

1. A means of gripping (101; 121) in order to grip an object (102; 122), for example a plate, comprising a vacuum gripper (103; 123), which is provided with a vacuum chamber (107; 127) that is open on one side (113; 133) in order to attach itself firmly to an object, and which is provided with a sealing edge (135) along the perimeter of this opening that is in contact with the object when it is being gripped, and which is provided with at least one vacuum inlet (109; 129) on another side, which vacuum gripper comprises a means of producing a vacuum that is connected through the vacuum inlet to the vacuum chamber and which means of gripping, furthermore, comprises a gripping magnet (105; 125), which along with the vacuum gripper is integrated into one unit, as well as a means of releasing in order to release the gripping magnet and the object to be lifted from each other, which means of releasing comprises a pressure chamber (117;137) which is provided with an air inlet (115; 138), as well as a means of blowing air which is connected to the pressure chamber through the air inlet, in order to move the gripping magnet and the open side of the vacuum chamber to and from each other, **characterized in that** the means of releasing comprises an inflatable bellows (119; 131), the interior of which is the pressure chamber (117; 137), which bellows is situated round about the gripping magnet (105; 125) or is connected to the gripping magnet and when it is inflated pushes the object (102; 122) and the gripping magnet away from each other.

2. A means of gripping (121) according to claim 61, **characterized in that** the sealing edge (135) is situated on the underside of the bellows.

3. Lifting device for lifting an object, in particular a plate, comprising a means of gripping (101; 121) according to one of the preceding claims, as well as a means of lifting for raising and lowering the means of gripping.

## Patentansprüche

1. Greifmittel (101; 121) für das Aufgreifen eines Gegenstandes (102; 122), insbesondere einer Platte, die einen mit einer einseitig (113; 133) offenen Unterdruckkammer (107; 127) für die Vakuumfixierung eines Gegenstandes versehenen Sauggreifer (103; 123) umfasst, welcher am äußeren Rand dieser offenen Seite mit einer umlaufenden Dichtung (135) versehen ist, die sich mit einem aufgegriffenen Gegenstand in Kontakt befindet und auf einer anderen Seite mindestens eine Saugöffnung (109; 129) besitzt, wobei der Sauggreifer Unterdruckmittel umfasst, die über die Saugöffnung mit der Unterdruckkammer in Verbindung stehen, und wobei die Greifmittel ferner einen Greifmagneten (105; 125) umfassen, der zusammen mit dem Sauggreifer zu einer Einheit zusammengefasst ist, sowie Trennvorrichtungen, mit denen der anzuhebende Gegenstand von dem Greifmagneten getrennt wird, wobei die Trennvorrichtungen eine mit einer Blasöffnung (115; 138) versehene Druckkammer (117; 137) sowie Blasmittel umfassen, die über die Blasöffnung mit der Druckkammer in Verbindung stehen und es ermöglichen, den Greifmagneten, bezogen auf die offene Seite der Unterdruckkammer, vor- und zurückzubewegen, **dadurch gekennzeichnet, dass** die Trennvorrichtungen einen aufblasbaren Balgen (119; 131) umfassen, dessen Inneres die Druckkammer (117; 137) bildet, wobei der Balgen den Greifmagneten (105; 125) umschließt oder mit dem Greifmagneten verbunden ist und der Gegenstand (102; 122) und der Greifmagnet beim Aufblasen des Balgens auseinander gedrückt werden.

2. Greifmittel (121) nach Anspruch 1, **dadurch gekennzeichnet, dass** sich die umlaufende Dichtung (135) an der Unterseite des Balgens befindet.

3. Hubvorrichtung für das Anheben eines Gegenstandes, insbesondere einer Platte, die Greifmittel (101; 121) nach einem der vorangegangenen Ansprüche sowie Hebezeuge für das Anheben und Absenken der Greifmittel umfasst.

## Revendications

1. Moyens de préhension (101; 121) pour la saisie d'un objet (102; 122), plus particulièrement d'une plaque, comprenant un préhenseur-ventouse (103; 123) qui est pourvu d'un espace à vide (107; 127) étant ouvert d'un côté (113; 133) pour permettre l'aspiration d'un objet, et qui est pourvu, sur le pourtour de ce côté ouvert, d'un bord d'étanchéité (135) qui est en contact avec l'objet lors de la saisie d'un objet, et qui est pourvu, d'un autre côté, d'au moins une ouverture d'aspiration (109; 129), lequel préhenseur-ventouse comprend des moyens pour faire le vide qui sont en contact avec l'espace à vide via l'ouverture d'aspiration, et lesquels moyens de préhension comprennent en outre un aimant de préhension (105; 125), qui est intégré dans et forme un tout avec le préhenseur-ventouse, ainsi que des moyens de détachage pour détacher l'un de l'autre l'aimant de préhension et l'objet à soulever, lesquels moyens de détachage comprennent un espace à pression (117; 137) qui est pourvu d'une ouverture pour souffler (115; 138), ainsi que des moyens de soufflage qui sont en contact avec l'espace à pression via l'ouverture pour souffler, pour écarter l'un de l'autre et rapprocher l'un vers l'autre l'aimant de préhension et le côté ouvert de l'espace à vide, **caractérisé en ce que** les moyens de détachage comprennent un soufflet gonflable (119; 131) dont l'intérieur forme l'espace à pression (117; 137), lequel soufflet se trouve autour de l'aimant de préhension (105; 125) ou est relié à l'aimant de préhension et, lorsqu'il se gonfle, fait pression pour que l'objet (102 ; 122) et l'aimant de préhension se détachent l'un de l'autre.

2. Moyens de préhension (121) selon la revendication 1, **caractérisé en ce que** le bord d'étanchéité (135) se trouve sur la face inférieure du soufflet.

3. Dispositif élévateur pour le levage d'un objet, plus particulièrement d'une plaque, comprenant des moyens de préhension (101; 121) selon une des revendications précédentes, ainsi que des moyens de levage pour déplacer les moyens de préhension vers le haut et vers le bas.
